Europäisches Patentamt

European Patent Office

Office européen des brevets

(11) Publication number: **0 071 678**
**B1**

# EUROPEAN PATENT SPECIFICATION

(45) Date of publication of patent specification: **08.01.86**

(21) Application number: **81303604.3**

(22) Date of filing: **06.08.81**

(51) Int. Cl.⁴: **F 16 L 15/02, F 16 L 19/06**

(54) **Pipe coupling.**

(43) Date of publication of application:
**16.02.83 Bulletin 83/07**

(45) Publication of the grant of the patent:
**08.01.86 Bulletin 86/02**

(84) Designated Contracting States:
**AT DE FR GB IT SE**

(56) References cited:
**DE-A-2 749 391**
**US-A-4 223 923**

(73) Proprietor: **DEERE & COMPANY**
**1 John Deere Road**
**Moline Illinois 61265 (US)**

(72) Inventor: **Ludwig, Dieter**
**Freudenbergstrasse 26**
**D-6940 Weinheim (DE)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to a pipe coupling of the type comprising two unions and invervening length of pipe fixed in the unions by respective back nuts and compression rings inside the nuts. Conventional couplings, such as those produced in accordance with German Industry Standard DIN 3901/02, utilise unions with internal shoulders serving as stops for the pipe ends. It is contemplated that the pipe fitter will suit the lengths of intervening pipe to the exact distance between the two unions. In the installation of hydraulic lines of agricultural and earth moving equipment, for example, it is difficult to maintain precise alignments and spacings of parts and satisfactory installation of the hydraulic lines entails a lot of fitting work

The compression ring 5 is a metal ring of essentially conventional form although, particularly for repeated use of the coupling, it is preferably internally serrated to cooperate with serrations 8 on the corresponding pipe end, whereby the compression ring 5 is firmly anchored on the pipe, and is in particular axially fixed relative to the pipe, once it has been compressed onto the pipe by tightening up the back nut 4. The coresponding union 1 is also conventional and has an internal shoulder 9 acting as a stop for the end of the pipe 3.

At the other end of the pipe a modified union 2 is employed and the compression ring 7 is not a conventional metal ring but is made of a tough plastics material selected to be resistant to whatever fluid is carried by the pipes. The significance of this is that, unlike a metal compression ring, the pastics compression ring 7 will not bind onto the pipe 3 even after repeated tightening up of the back nut 6. Accordingly it is possible to make and unmake the coupling several times with possible adjustment of the location of the compression ring 7 on the pipe. If this is envisaged, it is preferred to employ the illustrated construction in conjunction with the first union 1, so that the pipe position is fixed at one end.

Within the union 2, the pipe position can vary by axial sliding, before the back nut 6 is tightened up, and to allow a reasonable range of adjustment, it will be seen that the union 2 is bored out throughout its whole length to accommodate the outside diameter of the pipe 3. In other words, the shoulder of union 1 is absent. This allows the use of an overlength pipe 3 with the assurance that the end of the pipe will always be fully within the compression ring 7 over an appreciable range of spacings between the unions 1 and 2. To achieve this end it is not essential to bore out the union 2 over the whole of its length. The union may be bored out partially so as to set the shoulder 9 say one or two centimetres deeper into the union, thus providing a reasonable clearance for the length of the pipe 3 relative to the union to union spacing.

The plastics compression ring 7 also accommodates without detriment to the seal a reasonable amount of misalignment between the axis of the pipe 3 and the axis of the union 2 and its back nut 6.

It is also known (US 4 223 923 for example) to provide sliding pipe couplings involving floating seals, for use as expansion joints. Such couplings are inevitably more expensive than those employed in installation of hydraulic lines on vehicles. Moreover they are liable to deteriorate and leak especially in the harsh environment of agricultural equipment.

The object of the present invention is to provide a pipe coupling which does not require the connecting pipe to be of any precise length but which adjusts simply in installation in accordance with the actual spacing encountered between the two unions. The coupling can be used to make a one time connection but it can also be used to make repeated connections without the spacing between the unions necessarily being maintained the same. Another object of the invention is to provide a coupling which will tolerate better than known couplings small degrees of misalignment between the axes of the pipe and pipe union.

The pipe coupling according to the invention is defined in claim 1.

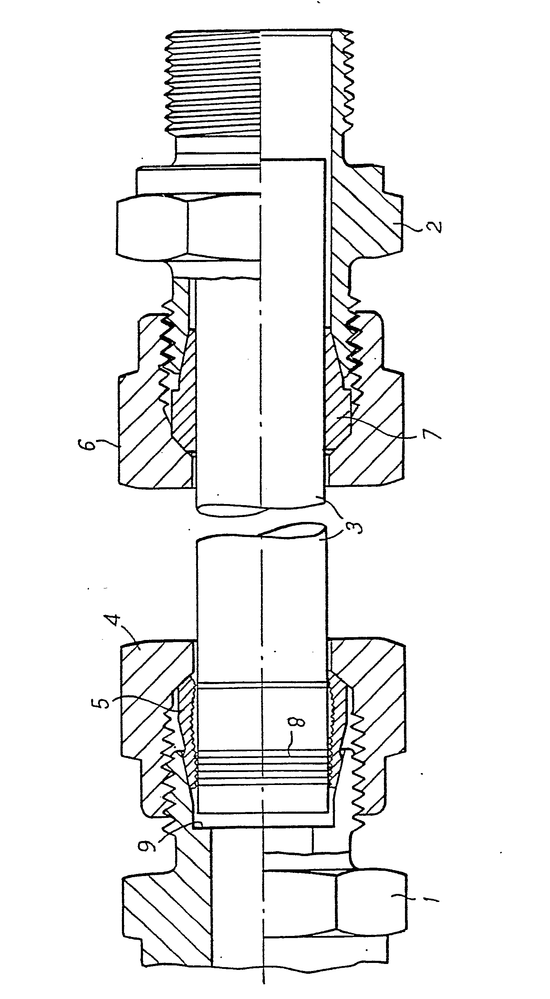

The invention will now be described in more detail by way of example with reference to the sole figure of the accompanying drawings which is an elevation, largely in section, of a pipe coupling embodying the invention.

The pipe coupling comprises two pipe unions 1 and 2 which are fitted to the ends of two pipes (not shown) to be coupled together by means of the coupling. The unions themselves are coupled by an intervening pipe 3 which is held in the union 1 by a back nut 4 and a compression ring 5. The other end of the pipe 3 is held in the union 2 by a back nut 6 and a compression ring 7.

Although the compression ring 7 may be separate it may, for convenience, be incorporated in the back nut 6 as a unitary metal and plastics part. For certain applications the back nut 6 can be of plastics material and the back nut and compression ring 7 can then be moulded in one piece, if desired.

## Claims

1. A pipe coupling comprising two unions (1, 2) and an intervening length of pipe fixed in the unions by respective back nuts (4, 6) and compression rings (5, 7) inside the nuts, characterised in that one compression ring (7) is made of a material such as to prevent it binding on the pipe (3) and allow longitudinal shifting on the pipe before lightening or on release of the nut containing said one compression ring (7).

2. A pipe coupling according to claim 1, characterised in that the said one compression ring (7) is made of plastics material.

3. A pipe coupling according to claim 1 or 2, characterised in that the union (2) corresponding to the said one compression ring (7) is at least partially bored out to accommodate a variable length of the pipe.

4. A pipe coupling according to claim 1, 2 or 3, characterised in that the said one compression ring (7) is combined to form a unit with the corresponding back nut (6).

5. A pipe coupling according to any of claims 1 to 4, characterised in that the other compression ring (5) is metal.

6. A pipe coupling according to claim 5, characterised in that the said other compression ring (5) is internally serrated to bind on to the pipe.

## Revendications

1. Dispositif de raccordement pour tuyaux comprenant deux raccords (1, 2) et un tronçon de tuyau intermédiaire fixé dans les raccords par des écrous à collerette (4, 6) et des bagues de compression (5, 7) respectifs engagées dans les écrous, caractérisé en ce qu'une bague de compression (7) est en un matériau tel qu'il s'oppose à son frippage sur le tuyau (3) et permet un déplacement longitudinal par coulissement sur le tuyau avant serrage ou après dess rrage de l'écrou entrourant cette bague de compression (7).

2. Dispositif de raccordement pour tuyaux suivant la revendication 1, caractérisé en ce que cette bague (7) est en matière plastique.

3. Dispositif de raccordement pour tuyaux suivant la revendication 1 ou 2, caractérisé en ce que le raccord (2) correspondant à cette bague de compression (7) est au moins partiellement alésé pour pouvoir recevoir un tronçon de tuyau de longueur variable.

4. Dispositif de raccordement pour tuyaux suivant la revendication 1, 2 ou 3, caractérisé en ce que cette bague de compression (7) est combinée à l'écrou à collerette correspondant (6) pour former un ensemble unitaire.

5. Dispositif de raccordement pour tuyaux suivant l'une quelconque des revendications 1 à 4, caractérisé en ce que l'autre bague de compression (5) est en métal.

6. Dispositif de raccordement pour tuyaux suivant la revendication 5, caractérisé en ce que cette autre bague de compression (5) est munie intérieurement d'indentations pour réaliser son accrochage sur le tuyau.

## Patentansprüche

1. Rohrkupplung, die zwei Verbindungen (1, 2) und eine dazwischenliegende Rohrlänge umfaßt, die in den beiden Verbindungen jeweils Gegenmuttern (4, 6) und in diesen angeordnete Druckringe (5, 7) festgelegt ist, dadurch gekennzeichnet, daß ein Druckring (7) aus einem solchen Material hergestellt ist, das ein Festhaften auf dem Rohr (3) verhindert und eine Längsverschiebung auf dem Rohr vor dem Festziehen oder bei Lösen der Mutter ermöglicht, welche den besagten einen Druckring (7) enthält.

2. Rohrkupplung nach Anspruch 1, dadurch gekennzeichnet, daß der besagte eine Druckring (7) aus Kunststoff besteht.

3. Rohrkupplung nach Anspruch 1 oder 2, dadurch gekennzeichnet, daß die Verbindung (2), die zu dem besagten einen Druckring gehört, winigstens teilweise ausgebohrt ist, um eine variable Länge des Rohres aufnehmen zu können.

4. Rohrkupplung nach Anspruch 1, 2 oder 3, dadurch gekennzeichnet, daß der besagte eine Druckring (7) kombiniert ist, so daß er eine Einheit mit der korrespondierenden Gegenmutter (6) bildet.

5. Rohrkupplung nach irgendeinem der Ansprüche 1 bis 4, dadurch gekennzeichnet, daß der andere Druckring (5) aus Metall besteht.

6. Rohrkuppling nach Anspruch 5, dadurch gekennzeichnet, daß der andere Druckring (5) zur Festlegung auf dem Rohr innen geriffelt ist.

0 071 678